# EUROPEAN PATENT SPECIFICATION

(11) **EP 2 473 416 B1**
(45) Date of publication and mention of the grant of the patent: **12.11.2014**
(21) Application number: 10763843.9
(22) Date of filing: 02.09.2010
(51) Int. Cl.: B65D 27/06, B65D 27/34

(54) **REUSABLE ENVELOPE**
WIEDERVERWENDBARER BRIEFUMSCHLAG
ENVELOPPE REUTILISABLE

(30) Priority: 02.09.2009 GB 0915244; 10.02.2010 GB 201002222
(43) Date of publication of application: 11.07.2012
(73) Proprietor: Hipplewith, Joanne, London, Greater London SW16 1AS (GB)
(72) Inventor: Hipplewith, Joanne, London, Greater London SW16 1AS (GB)
(74) Representative: Ablett, Graham Keith
(86) International application number: PCT/GB2010/051442
(87) International publication number: WO 2011/027153

(56) References cited:
- EP-A2- 1 033 316
- WO-A2-93/19991
- DE-A1- 4 410 851
- DE-U1- 29 903 579

## Description

We live in a world where we are increasingly reliant on computers not only in the work environment but also in our personal lives. However, there is still a need to transport information by post. We use envelopes and boxes to do this and often we dispose of envelopes once we have received them. In general society is becoming increasingly aware of resources and waste and therefore we are more likely to recycle our envelopes as opposed to throwing them away.

It is common in offices for internal envelopes to be used repeatedly to send information between teams or departments but the same principle does not generally apply to letters or parcels that are posted.

The present invention seeks to provide a solution to this problem, whereby DE 299 03 579 U1 provides a solution being based on adhesive labels providing space for both a new address and a postage stamp for re-posting.

According to the present invention there is provided an envelope-type and label-provided postal packaging for an item for posting as defined in claim 1.

The present invention therefore provides a reusable envelope in which an item can be carried for posting. That is, after the first use of the postal packaging, one of the detachable labels can be detached from the envelope and affixed over the previous postal markings, such as the used franking markings or stamp. A new postage payment can then be printed or fixed onto the front surface of the label, enabling the envelope to then be re-posted.

Preferably a plurality of detachable labels is provided for allowing repeated re-posting.

According to the invention, said detachable labels are provided on a back surface of the envelope.

The back surfaces of the detachable labels are adhesive.

Preferably, the adhesive is a pressure sensitive adhesive.

Preferably, the detachable labels are removably secured to a backing section on the back of the envelope.

Preferably, the backing section is a section of wax-coated paper.

The packaging according to the invention is an envelope.

Preferably, the front surface of the envelope is formed of paper for receiving a postage stamp.

According to the present invention, a plurality of address labels is provided on the front of the envelope, each of said plurality of address labels for displaying a postage address and being independently detachable from said envelope for removing the previous postage address from display prior to re-posting the envelope.

In an embodiment, the envelope further comprises a flap for closing the envelope, wherein said flap comprises a plurality of perforated sealing strips, each strip for sequentially allowing the flap to be affixed to a surface of the envelope for closing the envelope and separated from the remaining strips for opening the envelope.

In an embodiment, the envelope further comprises one or more return address labels provided on the back of the envelope, each of said return address labels for displaying a return postage address and being detachable from said envelope for removing the previous return postage address from display prior to re-posting the envelope.

Preferably, each of said return address labels comprises an adhesive back surface for affixing to a front surface of said envelope for displaying the return address as a new postage address for the return posting of the package.

Conveniently, a plurality of return address labels is provided.

The present invention will revolutionise our thinking about being environmentally conscious in our everyday lives. It could be adapted and personalised to meet the needs of both specialist (i.e. cards and invitations) and mass markets (i.e. commercial and public sector services). Labels could be developed based on the basic design described below for parcels [Re-Post labels]).

An illustrative embodiment of the present invention will now be described in reference to the accompanying drawings, in which:
Figure 1 shows a perspective view of the front of the envelope according to the embodiment of the present invention;
Figure 2 shows a perspective view of the back of the envelope according to the embodiment of the present invention; and
Figure 3 shows a step by step illustrative guide to demonstrate how the present invention can be used between sender and recipient.

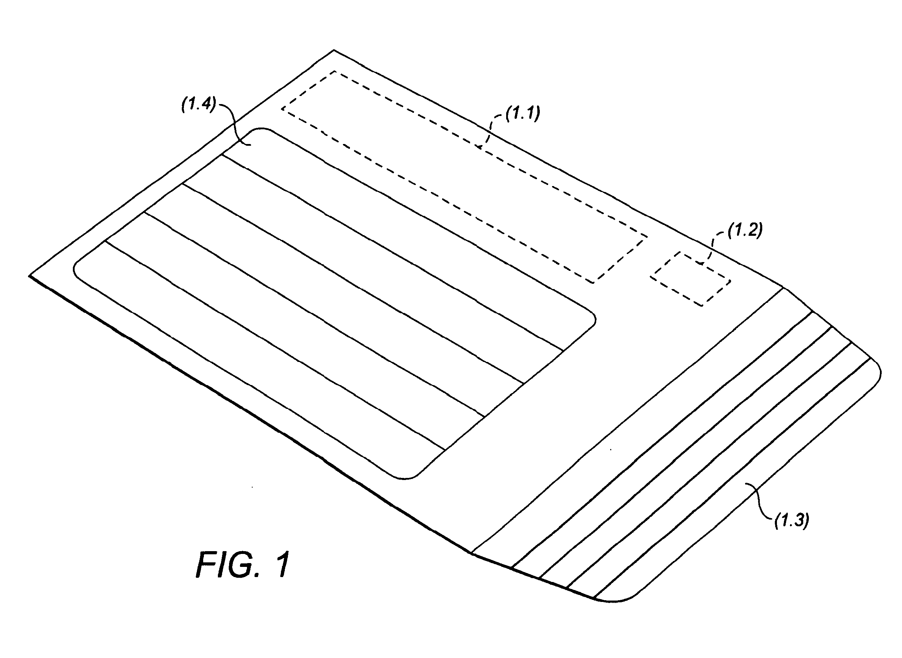

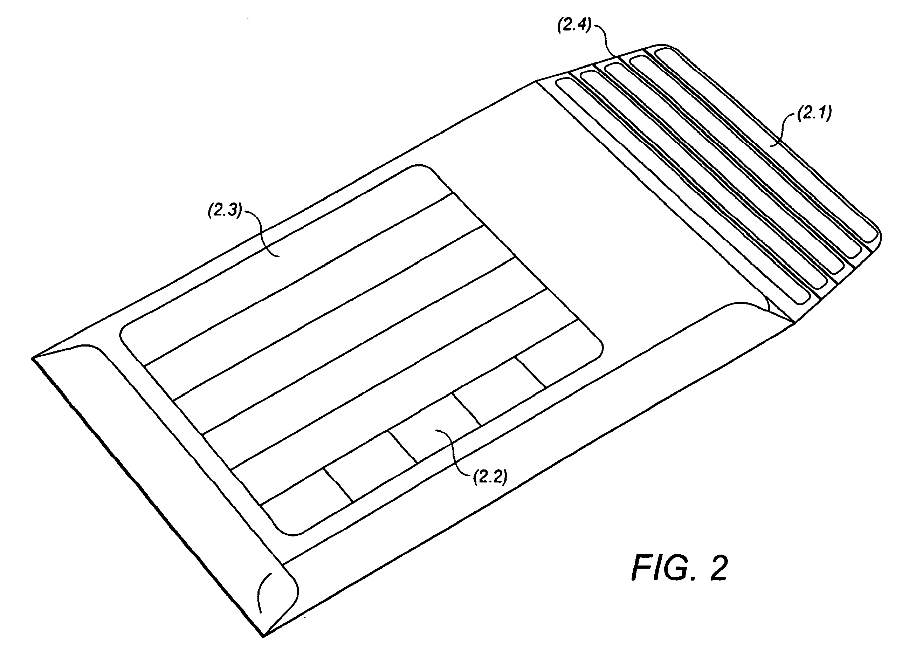

Figures 1 and 2 illustrates an embodiment of the present invention. In this embodiment, the envelope for receiving therein a letter for posting has five envelope seals (1.3) and five address labels (1.4), allowing the envelope to be used a total of five times. The size of the envelope dictates how many times the envelope can be reused.

Figure 2 illustrates what the back of the envelope looks like. Return address labels (2.3) is where the return address is written and rectangle stamp covers (2.2) are smaller squares which are used to cover up old postage stamps.

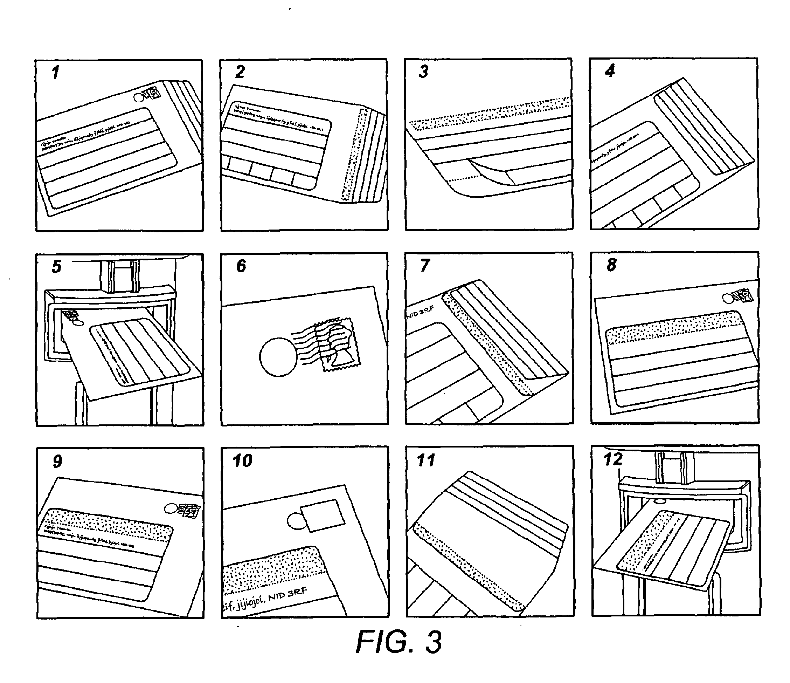

Figure 3 shows a step by step illustrative guide to demonstrate how the present invention can be used between sender and recipient.

Figure 1 shows the general design of the envelope which can be colour coded or numbered i.e. the first envelope seal (1.3) could be blue and the first address label(1.4) could also be colour coded blue or numbers could be used.

The subsequent seals (1.3) and address labels (1.4) could be coloured using different colours or corresponding numbers. The envelope also lends itself to other types of design i.e. cards and invitations. The address label (1.4) could be lengthened or shorten according to different markets and associated needs or companies could overprint their address and logo details on a subsequent address label (1.4) so the envelope could become the recipients return envelope or SAE.

With reference to Figure 2, the stamp cover (2.2) can be adapted to accommodate the envelope being used for letters sent recorded delivery or by any other special method which would increase the space required for additional postage information. It might mean that additional sticky labels are provided. Other options would be, if sold in packs, one or two envelopes could be adapted to facilitate this, i.e. 'mixed packs' which further promote the use and adaptability of the envelope in meeting the needs of its users. This corresponds with Figure 1 (1.1) area for additional postage information/payment.

Figure 3 is a graphic illustration of how the present invention could work in the real world. Illustrations 1 to 7 highlight the versatility of the envelope but there is scope to develop a label which could be used for parcels based on the design illustrated in the attached drawings of re-useable seals and address labels whereby the scope of the invention is defined by the following claims.

## Claims

1. An envelope for an item for posting, the envelope comprising:-
a front;
a back;
one or more detachable labels (2.2) provided on the back of the envelope having an adhesive back surface and being sized for affixing over used postage marks on the front of the envelope and a front surface for displaying the postage payment for re-posting the envelope; and
a plurality of other, different labels being, address labels (1.4) provided on the front of the envelope, each of said plurality of address labels being sized for displaying a postage address and being independently detachable from the front of the envelope for removing the previous postage address from display prior to re-posting the envelope.

2. An envelope according to claim 1, wherein a plurality of detachable labels (2.2) is provided for allowing repeated re-posting.

3. An envelope according to claim 1 or 2, wherein the adhesive is a pressure sensitive adhesive.

4. An envelope according to any preceding claim, wherein the detachable labels (2.2) are removably secured to a backing section on the back of the envelope

5. An envelope according to claim 4, wherein the backing section is a section of wax-coated paper.

6. An envelope according to any preceding claim, wherein said front is formed of paper for receiving a postage stamp.

7. An envelope according to any preceding claim, further comprising a flap for closing the envelope, wherein said flap comprises a plurality of perforated sealing strips (1.3), each strip for sequentially allowing the flap to be affixed to a surface of the envelope for closing the envelope and separated from the remaining strips for opening the envelope.

8. An envelope according to any preceding claim, further comprising one or more return address labels (2.3) provided on the back of the envelope, each of said return address labels (2.3) for displaying a return postage address and being detachable from said envelope for removing the previous return postage address from display prior to re-posting the envelope.

9. An envelope according to claim 8, wherein each of said return address labels (2.3) comprises an adhesive back surface for affixing to a front surface of said envelope for displaying the return address as a new postage address for the return posting of the envelope.

10. An envelope according to claim 8 or 9, wherein a plurality of return address labels (2.3) is provided.

## Patentansprüche

1. Umschlag für einen Artikel zum Senden, wobei der Umschlag Folgendes beinhaltet:
eine Vorderseite;
eine Rückseite;
eine oder mehrere ablösbare Etiketten (2.2), die auf der Rückseite des Umschlags bereitgestellt sind, eine Klebstoffrückseitenoberfläche aufweisen und dimensioniert sind, um über benutzte Frankaturen auf der Vorderseite des Umschlags befestigt zu werden, und eine Vorderseitenoberfläche aufweisen, um die Portozahlung zum Weitersenden des Umschlags anzuzeigen; und
eine Vielzahl von anderen, unterschiedlichen Etiketten, die auf der Vorderseite des Umschlags bereitgestellte Adressetiketten (1.4) sind, wobei jede der Vielzahl von Adressetiketten dimensioniert ist, um die Postadresse anzuzeigen, und unabhängig von der Vorderseite des Umschlags ablösbar ist, um die vorhergehende Postadresse vor dem Weitersenden des Umschlags von der Anzeige zu entfernen.

2. Umschlag gemäß Anspruch 1, wobei eine Vielzahl von ablösbaren Etiketten (2.2) bereitgestellt ist, um wiederholtes Weitersenden zu erlauben.

3. Umschlag gemäß Anspruch 1 oder 2, wobei der Klebstoff ein druckempfindlicher Klebstoff ist.

4. Umschlag gemäß einem der vorhergehenden Ansprüche, wobei die ablösbaren Etiketten (2.2) entfernbar an einem Trägerabschnitt auf der Rückseite des Umschlags gesichert sind.

5. Umschlag gemäß Anspruch 4, wobei der Trägerabschnitt ein Abschnitt aus wachsbeschichtetem Papier ist.

6. Umschlag gemäß einem der vorhergehenden Ansprüche, wobei die Vorderseite aus Papier gebildet ist, um eine Portomarke aufzunehmen.

7. Umschlag gemäß einem der vorhergehenden Ansprüche, der ferner eine Klappe beinhaltet, um den Umschlag zu schließen, wobei die Klappe eine Vielzahl von perforierten Verschlussstreifen (1.3) beinhaltet, wobei jeder Streifen der Klappe sequenziell erlaubt, an einer Oberfläche des Umschlags befestigt zu werden, um den Umschlag zu schließen, und von den restlichen Streifen getrennt zu werden, um den Umschlag zu öffnen.

8. Umschlag gemäß einem der vorhergehenden Ansprüche, der ferner eine oder mehrere auf der Rückseite des Umschlags bereitgestellte Retouradressetiketten (2.3) beinhaltet, wobei jede der Retouradressetiketten (2.3) zum Anzeigen einer Retouradresse und vom Umschlag ablösbar ist, um die vorhergehende Retouradresse vor dem Weitersenden des Umschlags von der Anzeige zu entfernen.

9. Umschlag gemäß Anspruch 8, wobei jede der Retouradressetiketten (2.3) eine Klebstoffrückseitenoberfläche beinhaltet, um an einer Vorderseitenoberfläche des Umschlags befestigt zu werden, um die Retouradresse als neue Postadresse zum Retoursenden des Umschlags anzuzeigen.

10. Umschlag gemäß Anspruch 8 oder 9, wobei eine Vielzahl von Retouradressetiketten (2.3) bereitgestellt ist.

## Revendications

1. Une enveloppe destinée à un article à poster, l'enveloppe comprenant :
un recto,
un verso,
une ou plusieurs étiquettes détachables (2.2) placées sur le verso de l'enveloppe et possédant une surface arrière adhésive et étant dimensionnées de façon à se fixer par dessus des marques d'affranchissement anciennes sur le recto de l'enveloppe et une surface avant destinée à afficher le paiement d'affranchissement pour la réexpédition de l'enveloppe, et
une pluralité d'autres étiquettes différentes qui sont des étiquettes d'adressage (1.4) placées sur le recto de l'enveloppe, chaque étiquette de ladite pluralité d'étiquettes d'adressage étant dimensionnée de façon à afficher une adresse d'expédition et étant détachable de manière indépendante du recto de l'enveloppe de façon à retirer de l'affichage l'adresse d'expédition précédente avant la réexpédition de l'enveloppe.

2. Une enveloppe selon la Revendication 1, où une pluralité d'étiquettes détachables (2.2) est fournie de façon à permettre une réexpédition répétée.

3. Une enveloppe selon la Revendication 1 ou 2, où l'adhésif est un adhésif par pression.

4. Une enveloppe selon l'une quelconque des Revendications précédentes, où les étiquettes détachables (2.2) sont fixées de manière amovible à une partie de renfort sur le verso de l'enveloppe.

5. Une enveloppe selon la Revendication 4, où la partie de renfort est une partie en papier paraffiné.

6. Une enveloppe selon l'une quelconque des Revendications précédentes, où ledit recto est formé d'un papier destiné à recevoir un timbre-poste.

7. Une enveloppe selon l'une quelconque des Revendications précédentes, comprenant en outre un rabat destiné à la fermeture de l'enveloppe, où ledit rabat comprend une pluralité de bandes de scellage perforées (1.3), chaque bande étant destinée à permettre de manière séquentielle au rabat d'être fixé à une surface de l'enveloppe de façon à fermer l'enveloppe et étant séparée des bandes restantes destinées à ouvrir l'enveloppe.

8. Une enveloppe selon l'une quelconque des Revendications précédentes, comprenant en outre une ou plusieurs étiquettes d'adressage de réexpédition (2.3) placées sur le verso de l'enveloppe, chacune desdites étiquettes d'adressage de réexpédition (2.3) étant destinée à afficher une adresse de réexpédition et étant détachable de ladite enveloppe de façon à retirer de l'affichage l'adresse de réexpédition précédente avant la réexpédition de l'enveloppe.

9. Une enveloppe selon la Revendication 8 où chacune desdites étiquettes d'adressage de réexpédition (2.3) comprend une surface arrière adhésive destinée à être fixée à une surface avant de ladite enveloppe de façon à afficher l'adresse de réexpédition en tant que nouvelle adresse d'expédition pour la réexpédition de l'enveloppe.

10. Une enveloppe selon la Revendication 8 ou 9, où une pluralité d'étiquettes d'adressage de réexpédition (2.3) sont fournies.
